# EUROPEAN PATENT APPLICATION

(11) **EP 4 411 863 A1**
(43) Date of publication of application: **07.08.2024**
(21) Application number: 23201935.6
(22) Date of filing: 05.10.2023
(51) Int. Cl.: H01M 4/131, H01M 4/36, H01M 4/525

(54) **POSITIVE ELECTRODE FOR RECHARGEABLE LITHIUM BATTERY, AND RECHARGEABLE LITHIUM BATTERY COMPRISING THE SAME**

(30) Priority: 16.12.2022 KR 20220177251
(71) Applicant: Samsung SDI Co., Ltd., Yongin-si, Gyeonggi-do 17084 (KR)
(72) Inventor: KWON, Seonyoung, 17084 Yongin-si (KR); OH, Eunok, 17084 Yongin-si (KR); SON, Jungwoo, 17084 Yongin-si (KR); OH, Yuntaek, 17084 Yongin-si (KR); KANG, Minkyeong, 17084 Yongin-si (KR); KWAK, Taehee, 17084 Yongin-si (KR)
(74) Representative: Russell, Tim

(57) **Abstract**

Disclosed are a positive electrode for a rechargeable lithium battery and a rechargeable lithium battery comprising the same, the positive electrode for the rechargeable lithium battery comprising a current collector and a positive electrode active material layer on the current collector, wherein the positive electrode active material layer comprises a positive electrode active material, the positive electrode active material comprises about 75 wt% to about 100 wt% of a first positive electrode active material in a form of a single particle and comprising a lithium nickel-based composite oxide having a nickel content of greater than or equal to about 70 mol% relative to the total metal excluding lithium, and about 0 wt% to about 25 wt% of a second positive electrode active material in a form of a secondary particle in which a plurality of primary particles are aggregated and comprising a lithium nickel-based composite oxide, and in an X-ray diffraction analysis of the positive electrode, and a ratio of a peak intensity of the (003) plane to a peak intensity of the (104) plane is greater than or equal to about 4.8.

## Description

### BACKGROUND OF THE INVENTION

### (a) Field of the Invention

A positive electrode for a rechargeable lithium battery and a rechargeable lithium battery comprising the same are disclosed.

### (b) Description of the Related Art

Rechargeable lithium batteries are used in various fields, including mobile devices, energy storage systems, and electric vehicles, due to their high energy density, high voltage, long cycle-life, and low self-discharge rate. Recently, as the rechargeable lithium battery is increasingly applied to electric vehicles, higher energy densities are required. This resulted in the use of a high nickel-based lithium metal oxide having a high nickel content as a positive electrode active material.

However, a rechargeable lithium battery using a lithium metal oxide with a layered structure and a high nickel content has a critical disadvantage of greatly deteriorating long-term cycle-life characteristics and thermal stability. Among them, a lithium nickel cobalt-based oxide is widely used, but since cobalt is expensive and has a limited reserve, efforts to minimize a cobalt content is increasing. However, a positive electrode active material with low or no cobalt content has problems of realizing no high performance due to significantly reduced capacity, even when a driving voltage is increased, and lacking structural stability and thermal stability. Accordingly, research on substituting some metals with manganese and the like is being conducted.

A generally-prepared lithium nickel-based composite oxide is in a form of a secondary particle in which a plurality of primary particles are aggregated, that is, in the form of polycrystals. The polycrystals become composed of smaller primary particles, as the nickel content is increased, and thus result in deteriorating performance and reducing thermal stability. However, a lithium nickel-based composite oxide in the form of the single particle has high structural stability and low cation mixing and is suppressed from crack generation during the cycle life and thus realizes stable performance, even when the nickel content is increased.

### SUMMARY OF THE INVENTION

The present invention is to provide a positive electrode for a rechargeable lithium battery with improved long-term cycle-life and thermal stability by applying a long-term cycle-life and low-cost positive electrode active material which is reduced from cation mixing due to high structural stability, exhibits an increase in crystal alignment, and is suppressed from crack generation during the charge and discharge, to improve problems of the conventional high nickel-based positive electrode such as low charge/discharge efficiency, thermal runaway, and the like.

In an embodiment, a positive electrode for a rechargeable lithium battery comprises a current collector and a positive electrode active material layer on the current collector, wherein the positive electrode active material layer comprises a positive electrode active material, the positive electrode active material comprises about 75 wt% to about 100 wt% of a first positive electrode active material in a form of a single particle and comprising a lithium nickel-based composite oxide having a nickel content of greater than or equal to about 70 mol% relative to the total metal excluding lithium, and about 0 wt% to about 25 wt% of a second positive electrode active material in a form of a secondary particle in which a plurality of primary particles are aggregated and comprising a lithium nickel-based composite oxide, and in an X-ray diffraction analysis of the positive electrode, a ratio of a peak intensity of the (003) plane to a peak intensity of the (104) plane is greater than or equal to about 4.8.

Another embodiment provides a rechargeable lithium battery comprising a positive electrode, a negative electrode, and an electrolyte comprising the positive electrode active material.

The positive electrode for a rechargeable lithium battery according to an embodiment may not only realize structural stability and long-term cycle-life but also overcome the reduced performance problem of the conventional high nickel-based positive electrode and improve charge/discharge efficiency and cycle-life characteristics and thermal stability by applying an economical positive electrode active material.

### BRIEF DESCRIPTION OF THE DRAWINGS

FIG. 1 is a schematic view illustrating a rechargeable lithium battery according to an embodiment.
FIG. 2 is a scanning electron microscope image of the first positive electrode active material prepared in Preparation Example 1.
FIG. 3 is a cycle-life characteristic evaluation graph of coin cells of Examples 1 and 2 and Comparative Examples 1 to 3.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter can be measured by a method well known to those skilled in the art, for example, may be measured by a particle size analyzer, or may be measured by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution. In addition, unless otherwise defined, the average particle diameter may be obtained by measuring the size (diameter or length of the major axis) of about 20 particles randomly in a scanning electron microscope image to obtain a particle size distribution, and in the particle size distribution, taking the diameter (D50) of the particles having a cumulative volume of 50 volume% as the average particle diameter.

Herein, "or" is not to be construed as an exclusive meaning, for example, "A or B" is construed to include A, B, A+B, and the like.

In addition, "metal" is interpreted as a concept including general metals, transition metals, and metalloids (semimetals).

### Positive Electrode

In an embodiment, a positive electrode for a rechargeable lithium battery comprises a current collector, and a positive electrode active material layer on the current collector, wherein the positive electrode active material layer comprises a positive electrode active material, the positive electrode active material comprises about 75 wt% to about 100 wt% of a first positive electrode active material in a form of a single particle and comprising a lithium nickel-based composite oxide having a nickel content of greater than or equal to about 70 mol% relative to the total metal excluding lithium, and about 0 wt% to about 25 wt% of a second positive electrode active material in a form of a secondary particle in which a plurality of primary particles are aggregated and comprising a lithium nickel-based composite oxide, and in an X-ray diffraction analysis of the positive electrode a ratio (I₀₀₃/I₁₀₄) of a peak intensity of the (003) plane to a peak intensity of the (104) plane is greater than or equal to about 4.8.

The X-ray diffraction analysis (XRD) may be performed not on an individual positive electrode active material but on a compressed positive electrode plate, wherein the positive electrode plate is completed with initial charge and discharge. The peak intensity means intensity indicated by a maximum value (maximum height) of an X-ray diffraction peak shown in an XRD graph. The (104) plane means a lattice plane corresponding to a Miller index 104, and the (003) plane means a lattice plane corresponding to a Miller index 003.

In the process of forming and compressing the positive electrode active material layer on the current collector, the (003) plane of the positive electrode active material has orientation, and according to an embodiment, a positive electrode plate having a peak intensity ratio of the (003) plane to the (104) plane in a range of greater than or equal to about 4.8 may be obtained. This positive electrode may improve initial charge/discharge efficiency cycle-life characteristics and thermal stability due to high crystallinity and high structural stability of the positive electrode active material in the compressed electrode plate. In an embodiment, the I₀₀₃/I₁₀₄ ratio may be, for example, about 4.8 to about 15, about 4.8 to about 10, or about 4.8 to about 8.

In addition, in the X-ray diffraction analysis of the positive electrode, a peak full width at half maximum (FWHM) of the (003) plane may be less than or equal to about 0.12. Herein, in the positive electrode plate, the positive electrode active material has high crystallinity and high structural stability, realizing long-term cycle-life characteristics and stability.

The positive electrode may have a density of greater than or equal to about 3.4 g/cc. The density of the positive electrode may be expressed as a density of a positive electrode mixture and mean a density of the positive electrode after the compressing. For example, the density of the positive electrode may be measured after coating a positive electrode active material composition on a positive electrode current collector followed by drying, and compressing and obtained by dividing a weight of all the other components except for the current collector in the positive electrode by a volume. The density of the positive electrode according to an embodiment may be, for example, about 3.4 g/cc to about 4.0 g/cc, about 3.4 g/cc to about 3.9 g/cc, or about 3.4 g/cc to about 3.8 g/cc. When the above density ranges are satisfied, the positive electrode may realize high capacity and high energy density.

In an embodiment, the positive electrode active material may comprise about 90 wt% to about 100 wt% of the first positive electrode active material and about 0 wt% to about 10 wt% of the second positive electrode active material. In this case, the ratio of the peak intensity of the (003) plane to the peak intensity of the (104) plane in the X-ray diffraction analysis of the positive electrode may be greater than or equal to about 6.5, for example, about 6.5 to about 15, about 6.5 to about 10, or about 7.0 to about 9.0. When the ratio of these peak intensities is satisfied, the positive electrode may exhibit very high crystallinity and structural stability, and may implement high initial charge/discharge efficiency and long-term cycle-life characteristics.

In another embodiment, the positive electrode active material may comprise about 75 wt% to about 95 wt% of the first positive electrode active material about 5 wt% to about 25 wt% of the second positive electrode active material. In this case, the ratio of the peak intensity of the (003) plane to the peak intensity of the (104) plane in the X-ray diffraction analysis of the positive electrode may be about 4.8 to about 6.5, to realize high capacity, initial charge/discharge efficiency, and long-term cycle-life characteristics.

### First Positive Electrode Active Material

The first positive electrode active material is in the form of a single particle, exists alone without a grain boundary within the particle, is composed of one particle, and has a monolith structure, an one body structure, or a non-aggregated particle, in which particles are not aggregated with each other but exist as an independent phase in terms of morphology, and may be expressed as a single particle (one body particle, single grain), for example, as a single crystal. The first positive electrode active material in the form of the single particle may exhibit improved cycle-life characteristics while realizing high capacity and high energy density.

The lithium nickel-based composite oxide of the first positive electrode active material may be represented by Chemical Formula 1. Chemical Formula 1 may be referred to as a high-nickel-based positive electrode active material.

[Chemical Formula 1] Liₐ₁Niₓ₁M¹_{y1}M²_{z1}O_{2-b1}X_{b1}

In Chemical Formula 1, 0.9≤a1≤1.8, 0.7≤x1≤1, 0≤y1≤0.3, 0≤z1≤0.3, 0.9≤x1+y1+z1≤1.1, 0≤b1≤0.1, M¹ and M² are each independently at least one element selected from Al, B, Ba, Ca, Ce, Co, Cr, Cu, Fe, Mg, Mn, Mo, Nb, Si, Sr, Ti, V, W, and Zr; and X is at least one element selected from F, P, and S.

For example, the lithium nickel-based composite oxide of the first positive electrode active material may be a cobalt-free lithium nickel-based composite oxide, and specific examples thereof may be a layered cobalt-free lithium nickel-based composite oxide, a cobalt-free high nickel-based composite oxide, or cobalt-free lithium nickel-manganese-based composite oxide. Herein, cobalt-free may mean no cobalt, no use of cobalt, or only trace amounts of cobalt.

Recently, while a demand for large or high-capacity rechargeable lithium batteries is rapidly increasing, since a supply of a positive electrode active material containing cobalt, a rare metal, is extremely insufficient, development of a cobalt-free positive electrode active material using no cobalt is being actively made. However, since cobalt plays a key role in forming a structure of the positive electrode active material, when the cobalt is removed, there may be problems of increasing resistance and not securing a long life due to structural defects and deteriorating performance such as a decrease in capacity and efficiency and the like. Conventionally known cobalt-free positive electrode active materials have an olivine-based crystal structure such as lithium iron phosphate (LFP), lithium manganese phosphate (LMP), lithium manganese iron phosphate (LMFP), and the like or a spinel crystal structure such as lithium manganese oxide (LMO) and the like rather than a layered structure. These materials have high structural stability but a limitation of low capacity due to a small amount of lithium usable inside the structure. On the contrary, a cobalt-free lithium nickel-based oxide with the layered structure has a relatively high lithium content in the structure and thus exhibits excellent capacity and efficiency characteristics and accordingly, is suitable for a high-capacity battery. However, this cobalt-free lithium nickel-based oxide is structurally unstable and thus brings about structural degradation according to the charges and discharges, resultantly deteriorating long-term cycle-life characteristics.

An embodiment is to introduce a cobalt-free high nickel-based first positive electrode active material in the form of the single particle and set crystallinity on a positive electrode plate, that is, a ratio of peak intensity of the (003) plane to that of the (104) plane in an X-ray diffraction analysis at a predetermined level or higher in order to improve structural stability of the positive electrode active material in a positive electrode and suppress crack generation during the charges and discharges, succeeding in simultaneously securing capacity characteristics, initial charge and discharge characteristics, long-term cycle-life characteristics, and thermal stability of a rechargeable lithium battery.

As a positive electrode active material comprising a cobalt-free lithium nickel-based composite oxide, a positive electrode active material in a form of a secondary particle in which a plurality of primary particles are aggregated may be often cracked during the charges and discharges due to deteriorated structural stability, failing in realizing long-term cycle-life characteristics. On the contrary, an embodiment is to introduce the first positive electrode active material containing cobalt-free lithium nickel-based composite oxide and having the form of the single particle, wherein this positive electrode active material in the form of the single particle has excellent structural stability due to a short lithium migration path and excellent alignment of crystals, improving long-term cycle-life characteristics of a rechargeable lithium battery and resultantly, providing a rechargeable lithium battery having high capacity, long-term cycle-life characteristics, and excellent thermal stability as well as a low cost.

For example, the cobalt-free lithium nickel-based composite oxide may be represented by Chemical Formula 2. Chemical Formula 2 may be referred to as a layered cobalt-free high-nickel positive electrode active material, or may be referred to as a cobalt-free nickel-manganese positive electrode active material.

[Chemical Formula 2] Liₐ₂Niₓ₂Mn_{y2}M³_{z2}O_{2-b2}X_{b2}

In Chemical Formula 2, 0.9≤a2≤1.8, 0.7≤x2<1, 0<y2≤0.3, 0≤z2≤0.3, 0.9≤x2+y2+z2≤1.1, 0≤b2≤0.1, M³ is at least one element selected from Al, B, Ba, Ca, Ce, Cr, Cu, Fe, Mg, Mo, Nb, Si, Sr, Ti, V, W, and Zr, and X is at least one element selected from S, F, and P.

The average particle diameter (D50) of single particles of the first positive electrode active material may be about 1 µm to about 12 µm, for example, about 1 µm to about 10 µm, about 1 µm to about 8 µm, or about 3 µm to about 6 µm. When the above particle size range is satisfied, high energy density may be implemented while exhibiting high capacity. Herein, the average particle diameter of the first positive electrode active material may be obtained by measuring the size (diameter or length of the major axis) of about 20 particles randomly among single particles in a scanning electron microscope image for the positive electrode to obtain a particle size distribution, and in the particle size distribution, taking the diameter (D50) of the particles having a cumulative volume of 50 volume% as the average particle diameter.

The first positive electrode active material may be prepared by a general co-precipitation method. For example, a nickel precursor and optionally a precursor of another metal element are co-precipitated to obtain a nickel-based hydroxide, a mixture of this and a lithium raw material is heat-treated to produce a lithium nickel-based composite oxide, and after the heat treatment, pulverizing operation may be added to obtain a powder in a form of a single particle. The pulverizing may take about 10 minutes to about 4 hours.

### Second Positive Electrode Active Material

The second positive electrode active material is in a form of a secondary particle in which at least two or more primary particles are aggregated while containing lithium nickel-based composite oxide, and may be in the form of, for example, polycrystal. According to an embodiment, when the second positive electrode active material is included, a positive electrode for a rechargeable lithium battery may realize higher energy density.

The average particle diameter (D50) of the secondary particle of the second positive electrode active material may be about 5 µm to about 20 µm, for example, about 8 µm to about 18 µm, or about 10 µm to about 15 µm. When the particle size range is satisfied, high energy density can be implemented while exhibiting high capacity. Herein, the average particle diameter of the second positive electrode active material may be obtained by measuring the size (diameter or length of the major axis) of about 20 particles randomly among the particles in the form of the secondary particle in a scanning electron microscope image for the positive electrode to obtain a particle size distribution, and in the particle size distribution, taking the diameter (D50) of the particles having a cumulative volume of about 50 volume% as the average particle diameter.

The composition of the lithium nickel-based composite oxide of the second positive electrode active material may be the same as or different from that of the first positive electrode active material.

For example, the lithium nickel-based composite oxide of the second positive electrode active material may be represented by Chemical Formula 1. The second positive electrode active material may be a layered high-nickel-based positive electrode active material represented by Chemical Formula 1.

For example, the second positive electrode active material may comprise a cobalt-free lithium nickel-based composite oxide. Details of the cobalt-free or cobalt-free positive electrode active material are as described above. For example, the cobalt-free lithium nickel-based composite oxide of the second positive electrode active material may be represented by Chemical Formula 2.

When both the first positive electrode active material and the second positive electrode active material are cobalt-free positive electrode active materials, high capacity and long-term cycle-life characteristics may be implemented while cost is reduced, and energy density may be further improved by mixing two types of positive electrode active materials, single particles and secondary particles.

The second positive electrode active material may be prepared by a general co-precipitation method. For example, a lithium nickel-based composite oxide may be produced by co-precipitating a nickel precursor and optionally a precursor of another metal element to obtain a nickel-based hydroxide, mixing this with a lithium raw material and heat-treating the resultant.

The positive electrode active material layer may further comprise a binder and/or a conductive material in addition to the positive electrode active material.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

A content of the binder in the positive electrode active material layer may be about 1 wt% to about 5 wt% based on the total weight of the positive electrode active material layer.

The conductive material is included to provide electrode conductivity and any electrically conductive material may be used as a conductive material unless it causes a chemical change. Examples of the conductive material may comprise a carbon-based material such as natural graphite, artificial graphite, carbon black, acetylene black, ketjen black, a carbon fiber, a carbon nanofiber, a carbon nanotube, and the like; a metal-based material of a metal powder or a metal fiber comprising copper, nickel, aluminum, silver, and the like; a conductive polymer such as a polyphenylene derivative; or a mixture thereof.

A content of the conductive material in the positive electrode active material layer may be about 1 wt% to about 5 wt% based on the total weight of the positive electrode active material layer.

An aluminum foil may be used as the positive electrode current collector, but is not limited thereto.

### Rechargeable Lithium Battery

An embodiment provides a rechargeable lithium battery comprising the positive electrode, the negative electrode, and the electrolyte.

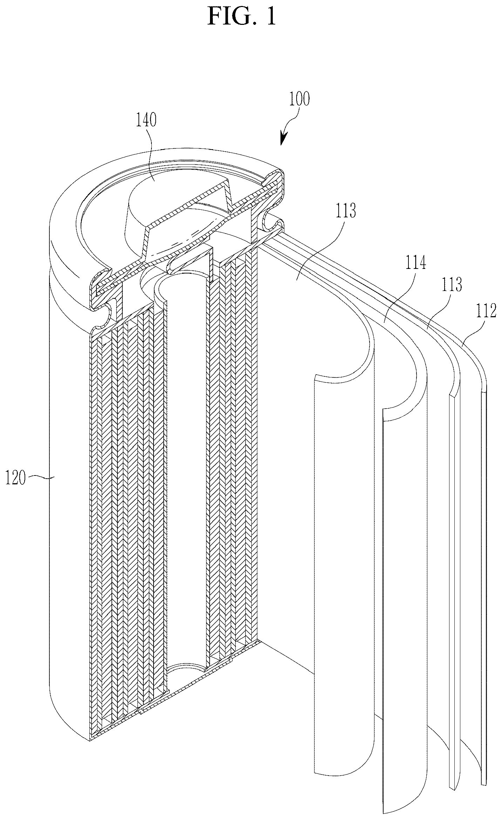

FIG. 1 is a schematic view illustrating a rechargeable lithium battery according to an embodiment. Referring to FIG. 1, a rechargeable lithium battery 100 according to an embodiment comprises a battery cell comprising a positive electrode 114, a negative electrode 112 facing the positive electrode 114, a separator 113 between the positive electrode 114 and the negative electrode 112, and an electrolyte for a rechargeable lithium battery impregnating the positive electrode 114, negative electrode 112, and separator 113, a battery case 120 housing the battery cell, and a sealing member 140 sealing the battery case 120.

### Negative Electrode

A negative electrode for a rechargeable lithium battery comprises a current collector and a negative electrode active material layer on the current collector. The negative electrode active material layer may comprise a negative electrode active material, and may further comprise a binder and/or a conductive material.

The negative electrode active material may comprise a material that reversibly intercalates/deintercalates lithium ions, a lithium metal, a lithium metal alloy, a material capable of doping/dedoping lithium, or transition metal oxide.

The material that reversibly intercalates/deintercalates lithium ions may comprise, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy comprises an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may comprise silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may comprise Sn, SnO₂, an Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

For example, the negative electrode active material may comprise silicon-carbon composite particles. An average particle diameter (D50) of the silicon-carbon composite particles may be, for example, about 0.5 µm to about 20 µm. The average particle diameter (D50) is measured by a particle size analyzer and means a diameter of particles at about 50 volume% of a cumulative volume in a particle size distribution. Based on about 100 wt% of the silicon-carbon composite particles, silicon may be comprised in an amount of about 10 wt% to about 60 wt%, and carbon may be comprised in an amount of about 40 wt% to about 90 wt%. The silicon-carbon composite particles may comprise, for example, a core containing silicon particles and a carbon coating layer disposed on the surface of the core. The silicon particles in the core may have an average particle diameter (D50) of about 10 nm to about 1 µm or about 10 nm to about 200 nm. The silicon particles may exist as silicon alone, in a form of a silicon alloy, or in an oxidized form. The oxidized silicon may be expressed as SiOₓ (0<x<2). In addition, the carbon coating layer may have a thickness of about 5 nm to about 100 nm.

For example, the silicon-carbon composite particle may comprise a core comprising silicon particles and crystalline carbon and a carbon coating layer disposed on the surface of the core and comprising amorphous carbon. For example, in the silicon-carbon composite particle, amorphous carbon may not exist in the core but only in the carbon coating layer. The crystalline carbon may be artificial graphite, natural graphite, or a combination thereof, and the amorphous carbon may be coal-based pitch, mesophase pitch, petroleum-based pitch, coal-based oil, petroleum-based heavy oil, or a polymer resin (phenol resin, furan resin, polyimide resin, etc.). In this case, a content of the crystalline carbon may be about 10 wt% to about 70 wt% and a content of the amorphous carbon may be about 20 wt% to about 40 wt% based on 100 wt% of the silicon-carbon composite particle.

In the silicon-carbon composite particle, the core may comprise a pore in the central portion. A radius of the pore may be about 30 length% to about 50 length% of a radius of the silicon-carbon composite particle.

The aforementioned silicon-carbon composite particle may be effectively suppressed from a problem such as volume expansion, structural collapse, particle crushing, or the like according to the charges and discharges and thus blocked from disconnection of a conductive path and realize high capacity and high efficiency and accordingly, advantageously used in high voltage or highspeed charging conditions.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

In the negative electrode active material layer, the negative electrode active material may be comprised in an amount of about 95 wt% to about 99 wt% based on the total weight of the negative electrode active material layer.

In an embodiment, the negative electrode active material layer further comprises a binder, and may optionally further include a conductive material. A content of the binder in the negative electrode active material layer may be about 1 wt% to about 5 wt% based on the total weight of the negative electrode active material layer. In addition, when the conductive material is further included, the negative electrode active material layer may comprise about 90 wt% to about 98 wt% of the negative electrode active material, about 1 wt% to about 5 wt% of the binder, and about 1 wt% to about 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

Examples of the water-insoluble binder comprise polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may comprise a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li. The amount of the thickener used may be about 0.1 parts by weight to about 3 parts by weight based on 100 parts by weight of the negative electrode active material.

The conductive material is included to provide electrode conductivity and any electrically conductive material may be used as a conductive material unless it causes a chemical change. Examples of the conductive material comprise a carbon-based material such as natural graphite, artificial graphite, carbon black, acetylene black, ketjen black, a carbon fiber, a carbon nanofiber, a carbon nanotube, and the like; a metal-based material of a metal powder or a metal fiber comprising copper, nickel, aluminum, silver, and the like; a conductive polymer such as a polyphenylene derivative; or a mixture thereof.

The negative electrode current collector may comprise one selected from a copper foil, a nickel foil, a stainless steel foil, a titanium foil, a nickel foam, a copper foam, a polymer substrate coated with a conductive metal, and a combination thereof.

### Electrolyte

The electrolyte comprises a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent comprise dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent comprise methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may comprise a double bond, an aromatic ring, or an ether bond), amides such as dimethylformamide, dioxolanes such as 1,3-dioxolane, sulfolanes, and the like.

The non-aqueous organic solvent may be used alone or in a mixture. When the organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further comprise an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

The aromatic hydrocarbon-based solvent may be an aromatic hydrocarbon-based compound represented by Chemical Formula I.

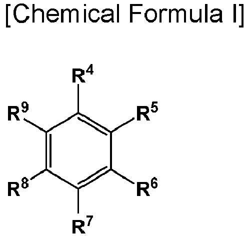

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further comprise vinylene carbonate or an ethylene carbonate-based compound represented by Chemical Formula II in order to improve cycle-life of a battery.

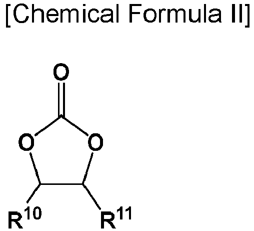

In Chemical Formula II, R¹⁰ and R¹¹ are the same or different and selected from hydrogen, a halogen, a cyano group, a nitro group, and fluorinated C1 to C5 alkyl group, provided that at least one of R¹⁰ and R¹¹ is a halogen, a cyano group, a nitro group, and fluorinated C1 to C5 alkyl group, and R¹⁰ and R¹¹ are not simultaneously hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt comprise at least one selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCl, LiI, LiB(C₂O₄)₂ (lithium bis(oxalato) borate, LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, the separator 113 may comprise a glass fiber, polyester, polyethylene, polypropylene, polytetrafluoroethylene, or a combination thereof, and may be in the form of a non-woven fabric or a woven fabric. For example, in a lithium ion battery, a polyolefin-based polymer separator such as polyethylene and polypropylene is mainly used. In order to ensure the heat resistance or mechanical strength, a coated separator comprising a ceramic component or a polymer material may be used. Optionally, it may have a mono-layered or multilayered structure.

Rechargeable lithium batteries may be classified as lithium ion batteries, lithium ion polymer batteries, and lithium polymer batteries according to the presence of a separator and the type of electrolyte used therein. The rechargeable lithium batteries may have a variety of shapes and sizes, and comprise cylindrical, prismatic, coin, or pouch-type batteries, and may be thin film batteries or may be rather bulky in size. Structures and manufacturing methods for these batteries pertaining to this disclosure are well known in the art.

The rechargeable lithium battery according to an embodiment may be used in an electric vehicle (EV), a hybrid electric vehicle such as a plug-in hybrid electric vehicle (PHEV), and portable electronic device because it implements a high capacity and has excellent storage stability, cycle-life characteristics, and high rate characteristics at high temperatures.

Hereinafter, examples of the present invention and comparative examples are described. However, the examples are for the purpose of illustration and are not to be construed as limiting the present invention.

### Preparation Example 1: Preparation of First Positive Electrode Active Material in Form of Single Particle

Nickel sulfate and manganese sulfate in a mole ratio of 75:25 are solved in distilled water as a solvent to prepare a mixed solution of metal raw materials, and a diluted solution of ammonia water (NH₄OH) and sodium hydroxide (NaOH) as a precipitant are prepared to form a complex compound. In a reactor, the mixed solution of the metal raw materials, the ammonia water, and the sodium hydroxide are put and then, reacted for about 20 hours, while stirred. Subsequently, a slurry solution in the reactor is filtered and dried with distilled water with high purity for 24 hours, obtaining positive electrode active material precursor (Ni_{0.75}Mn_{0.25} OH)₂ powder.

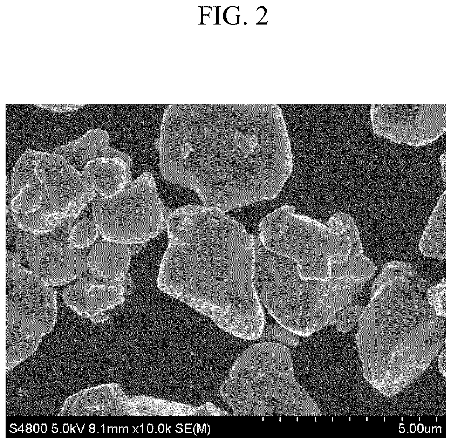

Then, the obtained positive electrode active material precursor is mixed with lithium hydroxide to have a Li/(Ni+Mn) ratio of 1.03 and then, heat-treated under an oxygen atmosphere at about 900 °C for 10 hours. The obtained product is pulverized for about 30 minutes, obtaining a first positive electrode active material (Li_{1.03}Ni_{0.75}Mn_{0.25}O₂) in a form of a single particle. FIG. 2 is a scanning electron microscope (SEM) image of the first positive electrode active material in the form of the single particle according to Preparation Example 1. The single particle has an average particle diameter (D50) of about 2.7 µm, when measured through the SEM image.

### Preparation Example 2: Preparation of Second Positive Electrode Active Material in Form of Secondary Particle

Nickel sulfate and manganese sulfate in a mole ratio of 75:25 are mixed in distilled water of a solvent to prepare a mixed solution of metal raw materials, and in order to form a complex compound, a diluted solution of ammonia water (NH₄OH) and sodium hydroxide (NaOH) as a precipitant are prepared. After adding the ammonia water dilution to a continuous reactor, the mixed solution of metal raw materials is continuously added thereto, and the sodium hydroxide is added thereto. A reaction slowly proceeds for about 80 hours, and when the reaction is stabilized, a product overflown therefrom is collected and then, washed and dried, obtaining positive electrode active material precursor (Ni_{0.75}Mn_{0.25}(OH)₂) powder.

The obtained positive electrode active material precursor and the lithium hydroxide are mixed to have a Li/(Ni+Mn) ratio of 1.03 and then, put in a firing furnace to perform a heat treatment under an oxygen atmosphere at about 840 °C for 15 hours, obtaining a second positive electrode active material (Li_{1.03}Ni_{0.75}Mn_{0.25}O₂) in the form of a secondary particle in which a plurality of primary particles are aggregated. The secondary particle has an average particle diameter (D50) of about 14 µm, when measured through an SEM image.

### Example 1

### (1) Manufacture of Positive Electrode

Positive electrode slurry is prepared by mixing 95 wt% of the first positive electrode active material in the form of the single particle according to Preparation Example 1, 3 wt% of a polyvinylidene fluoride binder, and 2 wt% of carbon nanotube conductive material in an N-methyl pyrrolidone solvent. The positive electrode slurry is coated at a loading level of 10 mg/cm² on an aluminum current collector, dried at 120 °C for 1 hour or more, and compressed at a density of 3.49 g/cc, manufacturing a 42 µm-thick positive electrode for a rechargeable lithium battery.

### (2) Manufacture of Rechargeable Lithium Battery Cell

The positive electrode is assembled with a lithium metal negative electrode and an about 20 µm-thick porous polyethylene separator therebetween to manufacture an electrode assembly, which is housed in a case, and an electrolyte is injected into the case, manufacturing a coin cell. Herein, the electrolyte is prepared by dissolving 1.15 M LiPF₆ in a mixed solvent of ethylenecarbonate (EC), ethylmethylcarbonate (EMC), and dimethylcarbonate (DMC) in a volume ratio of 3:3:4.

### Example 2

A positive electrode and a coin cell are manufactured in the same manner as in Example 1 except that 75 wt% of the first positive electrode active material in the form of the single particle according to Preparation Example 1 and 25 wt% of the second positive electrode active material in a form of a secondary particle according to Preparation Example 2 are used.

### Comparative Example 1

A positive electrode and a coin cell are manufactured in the same manner as in Example 1 except that 50 wt% of the first positive electrode active material in the form of the single particle according to Preparation Example 1 and 50 wt% of the second positive electrode active material in a form of a secondary particle according to Preparation Example 2 are used.

### Comparative Example 2

A positive electrode and a coin cell are manufactured in the same manner as in Example 1 except that 25 wt% of the first positive electrode active material in the form of the single particle according to Preparation Example 1 and 75 wt% of the second positive electrode active material in a form of a secondary particle according to Preparation Example 2 are used.

### Comparative Example 3

A positive electrode and a coin cell are manufactured in the same manner as in Example 1 except that 100 wt% of the second positive electrode active material in a form of a secondary particle according to Preparation Example 2 is used.

### Evaluation Example 1: X-ray Diffraction Analysis

The coin cells of Examples 1 and 2 and Comparative Examples 1 to 3 are initially charged under constant current (0.2 C) and constant voltage (4.25 V, 0.05 C cut-off) conditions, paused for 10 minutes, and discharged to 3.0 V under constant current (0.2 C) conditions to perform an initial charge and discharge.

An X-ray diffraction analysis (XRD) is performed on the positive electrodes of Examples 1 and 2 and Comparative Examples 1 to 3, which are completed with the initial charge and discharge, to obtain a ratio of a peak intensity of the (003) plane to that of the (104) plane (I(003)/I(104)), and the results are shown in Table 1 and to obtain a full width at half maximum (FWHM) of the (003) plane (FWHM₀₀₃), the results are shown in Table 1. X'pert made by Phillips is used as an analytical instrument, and CuK-alpha (wavelength: 1.5405980 Å) is used as an excitation source.

**(Table 1)**

| | I₀₀₃/I₁₀₄ | FWHM₀₀₃ |
|---|---|---|
| Comparative Example 3 | 1.356 | 0.161 |
| Comparative Example 2 | 2.342 | 0.125 |
| Comparative Example 1 | 3.588 | 0.122 |
| Example 2 | 4.806 | 0.119 |
| Example 1 | 7.115 | 0.108 |

Referring to Table 1, Examples 1 and 2 satisfy a I₀₀₃/I₁₀₄ ratio of greater than or equal to about 4.8, but Comparative Examples 1 to 3 do not satisfy it, and Examples 1 and 2 satisfy FWHM₀₀₃ of less than or equal to 0.12 but Comparative Examples 1 to 3 do not satisfy it.

### Evaluation Example 2: Evaluation of Initial Charge/discharge Efficiency and Cycle-life Characteristics

Table 2 shows that initial charge, initial discharge, and initial charge/discharge efficiency, which is a ratio of the initial discharge to the initial charge.

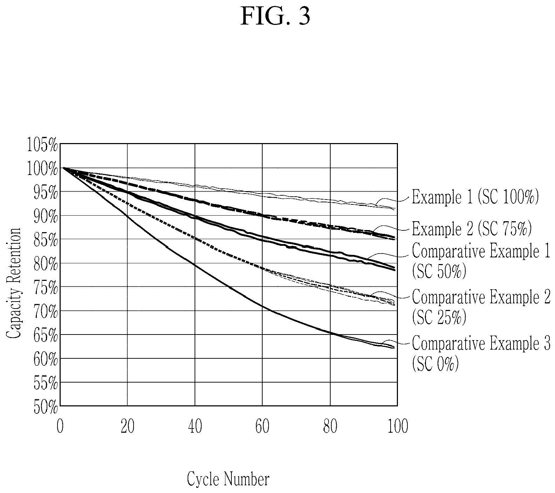

In addition, after the initial charge and discharge, the cells are repeatedly 100 times or more charged and discharged at 25 °C at 1 C/1 C. Then, the cells are evaluated with respect to capacity retention, which is a ratio of discharge capacity at each cycle to the initial discharge capacity, that is, high-temperature cycle-life characteristics, and the results are shown in FIG. 3.

**(Table 2)**

| | Initial charge capacity (mAh/g) | Initial discharge capacity (mAh/g) | Initial efficiency (%) |
|---|---|---|---|
| Comparative Example 3 | 235.4 | 201.4 | 85.6 |
| Comparative Example 2 | 234.7 | 200.7 | 85.5 |
| Comparative Example 1 | 234.6 | 200.6 | 85.5 |
| Example 2 | 235.3 | 201.8 | 85.8 |
| Example 1 | 235.7 | 203.1 | 86.2 |

Referring to Table 2, Examples 1 and 2 exhibit somewhat improved initial discharge capacity and initial efficiency, compared with Comparative Examples 1 to 3. Referring to FIG. 3, Examples 1 and 2 exhibit improved capacity retention at the 100^{th} cycle, compared with Comparative Examples 1 to 3. Particularly, Example 1 satisfies capacity retention of greater than or equal to 90% at the 100^{th} cycle.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

**<Description of Symbols>**

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A positive electrode for a rechargeable lithium battery comprising
a current collector and a positive electrode active material layer on the current collector,
wherein the positive electrode active material layer comprises a positive electrode active material,
the positive electrode active material comprises
75 wt% to 100 wt% of a first positive electrode active material in a form of a single particle and comprising a lithium nickel-based composite oxide having a nickel content of greater than or equal to 70 mol% relative to the total metal excluding lithium, and
0 wt% to 25 wt% of a second positive electrode active material in a form of a secondary particle in which a plurality of primary particles are aggregated and comprising a lithium nickel-based composite oxide, and
in an X-ray diffraction analysis of the positive electrode, a ratio of a peak intensity of the (003) plane to a peak intensity of the (104) plane is greater than or equal to 4.8.

2. The positive electrode of claim 1, wherein
in the X-ray diffraction analysis of the positive electrode, a peak full width at half maximum (FWHM) of the (003) plane is less than or equal to 0.12.

3. The positive electrode of claim 1 or claim 2, wherein
the positive electrode has a density of greater than or equal to 3.4 g/cc.

4. The positive electrode of any one of claims 1, to 3 wherein
the positive electrode active material comprises 90 wt% to 100 wt% of the first positive electrode active material and 0 wt% to 10 wt% of the second positive electrode active material.

5. The positive electrode of claim 4, wherein
in the X-ray diffraction analysis of the positive electrode, a ratio of a peak intensity of the (003) plane to a peak intensity of the (104) plane is greater than or equal to 6.5.

6. The positive electrode of any one of claims 1 to 3, wherein
the positive electrode active material comprises 75 wt% to 95 wt% of the first positive electrode active material 5 wt% to 25 wt% of the second positive electrode active material.

7. The positive electrode of claim 6, wherein
in the X-ray diffraction analysis of the positive electrode, a ratio of a peak intensity of the (003) plane to a peak intensity of the (104) plane is 4.8 to 6.5.

8. The positive electrode of any one of claims 1 to 7, wherein
the lithium nickel-based composite oxide of the first positive electrode active material is represented by Chemical Formula 1:
[Chemical Formula 1] Liₐ₁Niₓ₁M¹_{y1}M²_{z1}O_{2-b1}X_{b1}
wherein, in Chemical Formula 1, 0.9≤a1≤1.8, 0.7≤x1≤1, 0≤y1≤0.3, 0≤z1≤0.3, 0.9≤x1+y1+z1≤1.1, 0≤b1≤0.1, M¹ and M² are each independently at least one element selected from Al, B, Ba, Ca, Ce, Co, Cr, Cu, Fe, Mg, Mn, Mo, Nb, Si, Sr, Ti, V, W, and Zr; and X is at least one element selected from F, P, and S.

9. The positive electrode of any one of claims 1 to 8, wherein
the first positive electrode active material comprises a cobalt-free lithium nickel-based composite oxide.

10. The positive electrode of claim 9, wherein
the cobalt-free lithium nickel-based composite oxide is represented by Chemical Formula 2:
[Chemical Formula 2] Liₐ₂Niₓ₂Mn_{y2}M³_{z2}O_{2-b2}X_{b2}
wherein, in Chemical Formula 2, 0.9≤a2≤1.8, 0.7≤x2<1, 0<y2≤0.3, 0≤z2≤0.3, 0.9≤x2+y2+z2≤1.1, 0≤b2≤0.1, M³ is at least one element selected from Al, B, Ba, Ca, Ce, Cr, Cu, Fe, Mg, Mo, Nb, Si, Sr, Ti, V, W, and Zr, and X is at least one element selected from S, F, and P.

11. The positive electrode of any one of claims 1 to 10, wherein
an average particle diameter (D50) of the single particle of the first positive electrode active material is 1 µm to 12 µm.

12. The positive electrode of any one of claims 1 to 11, wherein
the second positive electrode active material comprises a cobalt-free lithium nickel-based composite oxide having a nickel content of greater than or equal to 70 mol% relative to the total metal excluding lithium.

13. The positive electrode of claim 12, wherein
the cobalt-free lithium nickel-based composite oxide of the second positive electrode active material is represented by Chemical Formula 2:
[Chemical Formula 2] Liₐ₂Niₓ₂Mn_{y2}M³_{z2}O_{2-b2}X_{b2}
wherein, in Chemical Formula 2, 0.9≤a2≤1.8, 0.7≤x2<1, 0<y2≤0.3, 0≤z2≤0.3, 0.9≤x2+y2+z2≤1.1, 0≤b2≤0.1, M³ is at least one element selected from Al, B, Ba, Ca, Ce, Cr, Cu, Fe, Mg, Mo, Nb, Si, Sr, Ti, V, W, and Zr, and X is at least one element selected from F, P, and S.

14. The positive electrode of any one of claims 1 to 13, wherein
an average particle diameter (D50) of the secondary particle of the second positive electrode active material is 5 µm to 20 µm.

15. A rechargeable lithium battery comprising a positive electrode according to any one of claims 1 to 14, a negative electrode, and an electrolyte.
